# FASCICULE DE BREVET EUROPEEN

(11) **EP 1 585 868 B1**
(45) Date de publication et mention de la délivrance du brevet: **24.01.2007**
(21) Numéro de dépôt: 04705104.0
(22) Date de dépôt: 26.01.2004
(51) Int. Cl.: E03C 1/23, F16C 1/12, F16C 1/16, F16C 1/18, F16K 31/46

(54) **DISPOSITIF DE COMMANDE DE VIDAGE**
ENTLEERUNGSSTEUERVORRICHTUNG
DISCHARGE CONTROL DEVICE

(30) Priorité: 24.01.2003 FR 0300758
(43) Date de publication de la demande: 19.10.2005
(73) Titulaire: Aliaxis R&D, 78540 Vernouillet (FR)
(72) Inventeur: OURY, Jean-Claude, F-38440 Artas (FR)
(74) Mandataire: Laget, Jean-Loup
(86) Numéro de dépôt international: PCT/FR2004/000169
(87) Numéro de publication internationale: WO 2004/067860

(56) Documents cités:
- DE-U- 29 520 180
- FR-A- 1 192 644
- FR-A- 2 475 181
- FR-E- 45 039

## Description

La présente invention concerne un dispositif de commande de vidage pour manoeuvrer le clapet d'une bonde d'un appareil sanitaire tel qu'un évier.

De manière habituelle, le dispositif de commande de vidage d'un appareil sanitaire est constitué soit d'un volant rotatif soit d'une tirette. Ainsi, le clapet de la bonde ne peut être actionné que par l'un ou l'autre des systèmes.

Un tel dispositif est décrit dans le document FR-A-2 475 181.

En fonction de la place libre pour le montage du dispositif de commande, il peut s'avérer préférable d'avoir un volant rotatif plutôt qu'une tirette.

Par conséquent, il convient de définir au préalable le type de commande qu'il est nécessaire d'installer, ce qui peut entraîner des erreurs et donc des achats inutiles. De plus, si l'erreur de choix n'est constatée qu'après montage, il convient de retirer l'ensemble du dispositif de commande pour en remettre un nouveau.

Afin de pallier ces inconvénients la présente invention a pour but de proposer un dispositif de commande de vidage pour appareil sanitaire qui peut être actionné par un organe de manoeuvre tel qu'un volant rotatif ou une tirette, le passage de l'un à l'autre des organes de manoeuvre étant simple et facile à mettre en oeuvre sans qu'il soit besoin de démonter l'ensemble du dispositif de commande.

A cet effet, l'invention a pour objet un dispositif de commande de vidage pour manoeuvrer le clapet d'une bonde d'un appareil sanitaire tel qu'un évier, comprenant un fût recevant à son extrémité supérieure un organe de manoeuvre et à son extrémité inférieure un boîtier dans lequel est logée l'extrémité d'un câble de liaison avec le clapet de la bonde, des moyens de transmission de la commande entre l'organe de manoeuvre et le câble s'étendant dans ledit fût de manière à pouvoir être couplés d'une part avec l'organe de manoeuvre et d'autre part avec le câble, caractérisé en ce que le boîtier est constitué de deux parties, la première partie solidaire du fût renfermant l'extrémité des moyens de transmission pouvant être couplés avec le câble et la seconde partie renfermant l'extrémité dudit câble, la seconde partie de boîtier étant assemblable à la première partie de boîtier de deux manières differentes pour permettre soit l'actionnement du câble à l'aide d'un organe de manoeuvre rotatif soit l'actionnement du câble à l'aide d'un organe de manoeuvre à soulèvement.

Ainsi, en fonction de l'assemblage de la seconde partie du boîtier, l'accouplement entre l'extrémité des moyens de transmission contenue dans la première partie du boîtier et l'extrémité dudit câble se fait différemment de manière à permettre une commande du câble par rotation de l'organe de manoeuvre ou par traction sur l'organe de manoeuvre.

On décrira maintenant l'invention plus en détail en référence au dessin dans lequel :
La figure 1 représente une vue en perspective éclatée d'un dispositif de commande selon l'invention avec un organe de manoeuvre par soulèvement ;
La figure 2 représente une vue en perspective éclatée d'un dispositif de commande selon l'invention avec un organe de manoeuvre rotatif ;
La figure 3 représente une vue en perspective d'un dispositif selon la figure 1 ; et
La figure 4 représente une vue en perspective d'un dispositif selon la figure 2.

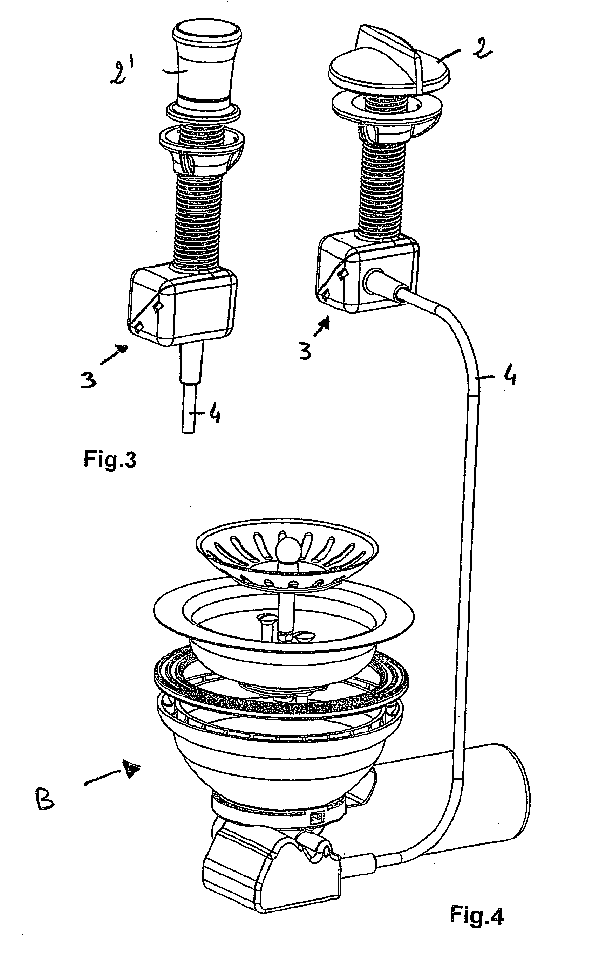

Le dispositif de commande de vidage selon l'invention est utilisé pour manoeuvrer le clapet d'une bonde B d'un appareil sanitaire tel qu'un évier (voir la figure 4).

Ce dispositif comprend un fût 1 recevant à son extrémité supérieure un organe de manoeuvre 2, 2' et à son extrémité inférieure un boîtier 3 dans lequel est logée l'extrémité d'un câble de liaison 4 avec le clapet de la bonde B.

Des moyens de transmission 5 de la commande entre l'organe de manoeuvre 2, 2' et le câble 4 s'étendent dans le fût 1 de manière à être couplés d'une part avec l'organe de manoeuvre 2 ou 2'et d'autre part avec le câble 4.

Le boîtier 3 est de forme parallélépipédique et est scindé selon une diagonale en deux parties 3a et 3b assemblables l'une à l'autre de deux manières différentes.

La première partie 3a est solidaire du fût 1 et renferme l'extrémité des moyens de transmission 5 pouvant être couplés avec le câble 4 et la seconde partie 3b renferme l'extrémité du câble 4. Ce câble 4 traverse une paroi de la seconde partie 3b de boîtier 3.

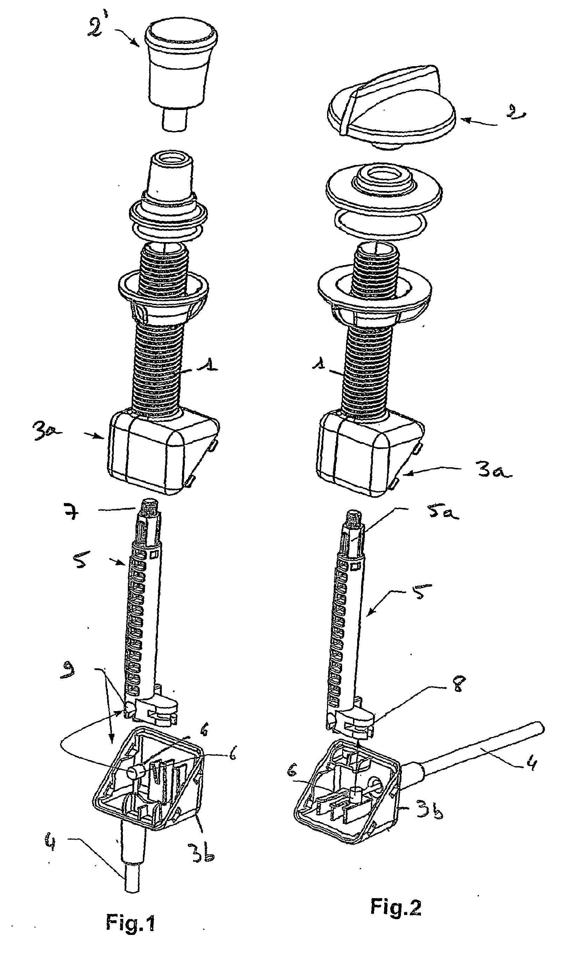

Par conséquent lorsque la seconde partie 3b du boîtier est assemblée à la première partie 3a du boîtier, le câble de liaison 4 peut se trouver coaxial avec le fût 1 (cf figures 1, 3) ou s'étendre perpendiculairement audit fût 1 (cf figures 2, 4). ,

De préférence, l'extrémité du câble de liaison 4 est pourvue d'un organe d'accouplement avec les moyens de transmission 5, constitué d'un tambour 6 d'extrémité du câble 4.

Les moyens de transmission sont constitués d'un axe 5 logé dans le fût 1 et dont une extrémité est pourvue de moyens de fixation d'un organe de manoeuvre soit rotatif 2 soit à soulèvement 2' et dont l'extrémité opposée logée dans la première partie 3a du boîtier 3 comporte des moyens de couplage avec l'extrémité du câble de liaison 4 selon deux positions d'assemblage de la seconde partie 3b de boîtier.

En effet, un premier moyen de couplage avec l'extrémité du câble de liaison 4 est constitué par un logement axial 8 décalé radialement par rapport à l'axe 5. Selon la position d'assemblage du boîtier 3 dans laquelle le câble 4 s'étend perpendiculairement au fût 1, le tambour 6 d'extrémité du câble 4 peut s'engager dans le logement axial 8.

Ainsi, lorsque l'organe de manoeuvre est un volant rotatif 2, la rotation de l'axe 5 sous l'effet du volant rotatif 2 provoque la rotation du tambour 6 d'extrémité du câble conduisant à une traction sur ledit câble 4.

Un second moyen de couplage avec l'extrémité du câble de liaison 4 est constitué par un logement 9 ménagé transversalement à l'extrémité de l'axe 5 et dans lequel le tambour 6 d'extrémité du câble est encliquetable lorsque le boîtier 3 est assemblé de sorte que le câble de liaison 4 soit coaxial avec l'axe 5 (figure 1). L'organe de manoeuvre est alors une tirette 2', le soulèvement de la tirette 2' provoquant alors le soulèvement de l'axe 5 qui exerce une traction sur le câble 4.

De manière à fixer un volant rotatif 2 sur l'extrémité de l'axe 5, l'extrémité 5a de celui-ci présente une forme à plusieurs pans, par exemple six pans.

Au-dessus de cette extrémité 5a est monté un embout fileté 7 qui sert à la fixation d'une tirette 2' pourvue d'un alésage fileté en correspondance.

Ainsi, la seconde partie 3b de boîtier est assemblable de deux manières differentes à la première partie 3a de boîtier pour permettre soit l'actionnement du câble 4 à l'aide d'un volant rotatif 2, soit l'actionnement du câble 4 à l'aide d'une tirette 2'.

## Revendications

1. Dispositif de commande de vidage pour manoeuvrer le clapet d'une bonde d'un appareil sanitaire tel qu'un évier, comprenant un fût (1) recevant à son extrémité supérieure un organe de manoeuvre (2, 2') et à son extrémité inférieure un boîtier (3) dans lequel est logée l'extrémité d'un câble de liaison (4) avec le clapet de la bonde, des moyens de transmission de la commande entre l'organe de manoeuvre (2, 2') et le câble (4) s'étendant dans ledit fût (1) de manière à pouvoir être couplés d'une part avec l'organe de manoeuvre (2, 2') et d'autre part avec le câble (4),
le boîtier (3) est constitué de deux parties, la première partie (3a) solidaire du fût (1) renfermant l'extrémité des moyens de transmission (5) pouvant être couplés avec le câble (4) et la seconde partie (3b) renfermant l'extrémité dudit câble (4), **caractérisé en ce que** la seconde partie (3b) de boîtier est assemblable à la première partie (3a) de boîtier de deux manières differentes pour permettre soit l'actionnement du câble (4) à l'aide d'un organe de manoeuvre rotatif (2) soit l'actionnement du câble à l'aide d'un organe de manoeuvre à soulèvement (2').

2. Dispositif de commande selon la revendication 1,
**caractérisé en ce que** le boîtier (3) de forme parallélépipédique est scindé selon une diagonale pour former les deux parties (3a, 3b) dudit boîtier.

3. Dispositif de commande selon la revendication 2,
**caractérisé en ce que** l'extrémité du câble de liaison (4) est pourvue d'un organe d'accouplement constitué d'un tambour (6) d'extrémité du câble.

4. Dispositif de commande selon la revendication 1,
**caractérisé en ce que** les moyens de transmission sont constitués d'un axe (5) logé dans le fût (1), dont une extrémité est pourvue de moyens de fixation soit d'un organe de manoeuvre rotatif (2) soit d'un organe de manoeuvre à soulèvement (2') et dont l'extrémité opposée logée dans la partie (3a) du boîtier solidaire du fût (1) comporte des moyens de couplage avec l'extrémité du câble de liaison (4) selon les deux positions d'assemblage de la seconde partie (3b) de boîtier.

5. Dispositif de commande selon la revendication 4,
**caractérisé en ce qu'**un moyen de couplage avec l'extrémité (6) du câble de liaison est constitué par un logement (8) axial décalé radialement par rapport à l'axe (5) constituant les moyens de transmission, et dans lequel s'engage le tambour (6) d'extrémité du câble lorsque l'organe de manoeuvre est un volant rotatif (2), la rotation de l'axe (5) sous l'effet du volant rotatif (2) provoquant la rotation du tambour (6) d'extrémité du câble conduisant à une traction sur ledit câble.

6. Dispositif de commande selon la revendication 4,
**caractérisé en ce qu'**un moyen de couplage avec l'extrémité du câble de liaison (4) est constitué par un logement (9) ménagé transversalement à l'extrémité de l'axe (5) et dans lequel le tambour (6) d'extrémité du câble est encliquetable lorsque l'organe de manoeuvre est une tirette (2').

7. Dispositif de commande selon la revendication 4,
**caractérisé en ce que** les moyens de fixation d'un organe de manoeuvre rotatif (2) sur l'axe (5) des moyens de transmission, sont constitués par l'extrémité (5a) de l'axe munie de plusieurs pans.

8. Dispositif de commande selon la revendication 4,
**caractérisé en ce que** les moyens de fixation d'un organe de manoeuvre par soulèvement (2') sur l'axe (5) des moyens de transmission sont constitués par un embout fileté (7) monté à l'extrémité (5A) dudit axe (5).

## Claims

1. Discharge control device for operating the valve of a plughole of a sanitary appliance such as a sink, said device comprising a shaft (1) receiving, at its upper end, an operating component (2, 2') and, at its lower end, a casing (3) in which the end of a cable (4) providing a link with the valve of the plughole is housed, means for transmitting control between the operating component (2, 2') and the cable (4) extending within the said shaft (1) in such a way as to be capable of being coupled, on the one hand, to the operating component (2, 2') and, on the other hand, to the cable (4), the casing (3) being made up of two parts, the first part (3a), which is integral with the shaft (1), enclosing the end of the transmitting means (5) which are capable of being coupled to the cable (4), and the second part (3b) enclosing the end of the said cable (4),
**characterised in that** the second casing part (3b) can be fitted to the first casing part (3a) in two different ways in order to permit either actuation of the cable (4) with the aid of a rotary operating component (2) or actuation of said cable with the aid of a lifting-type operating component (2').

2. Control device according to claim 1,
**characterised in that** the casing (3), which is parallelepipedal in shape, is divided along a diagonal so as to form the two parts (3a, 3b) of the said casing.

3. Control device according to claim 2,
**characterised in that** the end of the linking cable (4) is provided with a coupling component made up of an end drum (6) of the cable.

4. Control device according to claim 1,
**characterised in that** the transmitting means are made up of a spindle (5) which is housed in the shaft (1) and of which one end is provided with means for fixing either a rotary operating component (2) or a lifting-type operating component (2'), while the other end, which is housed **in that** part (3a) of the casing which is integral with said shaft (1), has means for effecting coupling to the end of the linking cable (4) according to the two positions for fitting the second part (3b) of the casing.

5. Control device according to claim 4,
**characterised in that** a means for effecting coupling to the end (6) of the linking cable is constituted by an axial housing (8) which is offset radially in relation to the spindle (5) constituting the transmitting means, and in which the end drum (6) of the cable engages when the operating component is a rotary hand-wheel (2), rotation of the spindle (5) under the effect of said rotary hand-wheel (2) giving rise to rotation of the end drum (6) of the cable leading to a pull on the said cable.

6. Control device according to claim 4,
**characterised in that** a means for effecting coupling to the end of the linking cable (4) is constituted by a housing (9) which is arranged transversely to the end of the spindle (5) and into which the end drum (6) of the cable can be snapped when the operating component is a pull handle (2').

7. Control device according to claim 4,
**characterised in that** the means for fixing a rotary operating component (2) onto the spindle (5) of the transmitting means are constituted by the end (5a) of the spindle, which end is provided with a number of faces.

8. Control device according to claim 4,
**characterised in that** the means for fixing a component (2') which operates by lifting, onto the spindle (5) of the transmitting means are constituted by a threaded tip (7) mounted at the end (5a) of the said spindle (5).

## Patentansprüche

1. Entleerungssteuerungsvorrichtung für die Betätigung der Klappe eines Abflussstopfens einer Sanitäreinrichtung, beispielsweise eines Waschbecken, mit einer Hülse (1), die an ihrem oberen Ende ein Bedienelement (2, 2') und an ihrem unteren Ende ein Gehäuse (3) aufnimmt, in dem das Ende eines Seils (4) für die Verbindung mit der Klappe des Abflussstopfens sitzt, wobei sich Übertragungsmittel der Steuerung zwischen dem Bedienelement (2, 2') und dem Seil (4) in der Hülse (1) erstrecken, so dass sie zum einen mit dem Bedienelement (2, 2') und zum anderen mit dem Seil (4) gekoppelt werden können, wobei das Gehäuse (3) aus zwei Teilen besteht, wobei das erste Teil (3a), das mit der Hülse (1) fest verbunden ist, das Ende der Übertragungsmittel (5) umschließt, die mit dem Seil (4) gekoppelt werden können, und das zweite Teil (3b) das Ende des Seils (4) umschließt, **dadurch gekennzeichnet, dass** das zweite Teil (3b) des Gehäuses auf zwei verschiedene Weisen an dem ersten Teil (3a) des Gehäuses montiert werden kann, um entweder die Betätigung des Seils (4) mithilfe eines Drehbedienelementes (2) oder die Betätigung des Seils mithilfe eines Hebebedienelementes (2') zu ermöglichen.

2. Vorrichtung nach Anspruch 1, **dadurch gekennzeichnet, dass** das Gehäuse (3) quaderförmig ausgebildet und entlang einer Diagonalen geteilt ist, um die beiden Teile (3a, 3b) des Gehäuses zu bilden.

3. Vorrichtung nach Anspruch 2, **dadurch gekennzeichnet, dass** das Ende des Verbindungskabels (4) mit einem Kopplungselement versehen ist, das aus einer Trommel (6) an dem Ende des Seiles besteht.

4. Vorrichtung nach Anspruch 1, **dadurch gekennzeichnet, dass** die Übertragungsmittel aus einer Achse (5) bestehen, die in der Hülse (1) sitzt und deren eines Ende mit Elementen zur Befestigung eines Drehbedienelement (2) oder eines Hebebedienelement (2') versehen ist und deren entgegengesetztes Ende, das in dem fest mit der Hülse (1) verbundenen Teil (3a) des Gehäuses sitzt, Kopplungselemente zur Verbindung mit dem Ende des Verbindungskabels (4) in den beiden Montagepositionen des zweiten Teils (3b) das Gehäuses umfasst.

5. Vorrichtung nach Anspruch 4, **dadurch gekennzeichnet, dass** ein Kopplungselement zur Verbindung mit dem Ende (6) des Verbindungsseils aus einer axialen Aufnahme (8) besteht, die radial zu der Achse (5), die die Übertragungsmittel bildet, verschoben ist und in die die Trommel (6) am Ende des Seils eingreift, wenn das Bedienelement ein Drehknauf (2) ist, wobei die durch Betätigung des Drehknaufs (2) erzeugte Drehung der Achse (5) die Drehung der Trommel (6) am Ende des Seils hervorruft, die in einen Zug an dem Seil umgesetzt wird.

6. Vorrichtung nach Anspruch 4, **dadurch gekennzeichnet, dass** ein Kopplungselement zur Verbindung mit dem Ende des Verbindungsseils (4) aus einer Aufnahme (9) besteht, die quer zu dem Ende der Achse (5) angeordnet ist und in die die Trommel (6) am Ende des Seils einschnappen kann, wenn das Bedienelement ein Handzug (2') ist.

7. Vorrichtung nach Anspruch 4, **dadurch gekennzeichnet, dass** die Elemente zur Befestigung eines Drehbedienelementes (2) an der Achse (5) der Übertragungsmittel von dem mit mehreren Kantflächen versehenen Ende (5a) der Achse gebildet werden.

8. Vorrichtung nach Anspruch 4, **dadurch gekennzeichnet, dass** die Elemente zur Befestigung eines Hebebedienelementes (2') an der Achse (5) der Übertragungsmittel von einem Gewindeansatz (7) gebildet werden, der an dem Ende (5a) der Achse (5) befestigt ist.
